# EUROPEAN PATENT SPECIFICATION

(11) **EP 1 452 752 B1**
(45) Date of publication and mention of the grant of the patent: **18.06.2008**
(21) Application number: 04002776.5
(22) Date of filing: 09.02.2004
(51) Int. Cl.: F16C 19/52, G01P 3/44

(54) **Protection device for an encoder in a rolling bearing**
Schutzvorrichtung für einen Geber in einem Wälzlager
Dispositif de protection pour un codeur dans un roulement

(30) Priority: 25.02.2003 IT TO20030134
(43) Date of publication of application: 01.09.2004
(73) Proprietor: Aktiebolaget SKF, S 415 50 Göteborg (SE)
(72) Inventor: Vignotto, Angelo, 10134 Torino (IT); Russo, Massimo, 10135 Torino (IT)
(74) Representative: Lotti, Giorgio

(56) References cited:
- EP-A- 1 241 368
- DE-A1- 10 009 216
- US-A- 5 674 011
- US-A1- 2002 158 422
- US-B1- 6 296 321

## Description

The present invention relates to a protection device for an encoder in a rolling bearing.

In general, the device according to the present invention may be advantageously applied in the field of rolling bearings for wheel hubs, in which an inner race of the bearing is axially blocked by the wheel hub by means of a rolled border on the inner race itself, and in which the wheel hub is mounted with the rolled border in such a way that it abuts a shoulder of a blocking joint of the bearing itself.

In the above-described field, well-known protection devices for encoders such as those described in the European Application Nr. EP 1 241 368 according to the preamble of claim 1 or in the US patent Nr. US 5,674,011, comprise a support shield which is integral with the encoder and which is force fit onto the inner race, and two annular sealing covers which are independent from each other, a first cover of which is mounted onto an outer race of the bearing in a frontal position to the encoder, and presents a rigid shield which is internally lined with rubber material, while a second shield is snap fitted onto the rolled border and presents a dynamic sealing element which is in sliding contact with the first cover, and a distance ring which is made of plastic material and which is interposed between the rolled border and the shoulder.

Furthermore, the first sealing cover presents at least one window which is obtained through the rigid shield in order to permit a reading sensor to face the encoder, the reading sensor being however separated from the encoder itself by an elastic wall which is defined by the internal lining material.

Although the above-described kind of protection devices have been shown to be very functional for some kinds of applications, they have however been shown to have some disadvantages in other applications, such disadvantages being related to the adoption of two covers which are independent from each other, and to the impossibility of protecting the encoder in a more direct manner. The adoption of two covers involves an assembly operation for each cover in a fashion that is substantially separate from the other cover with the use of some caution in the positioning of the sealing element which is interposed between the two covers, as well as the substantial difficulty of protecting the encoder more closely and directly in spite of the fact that current allowances and methodology relating to working and assembly lead to extremely positive results nowadays.

The aim of the present invention is to produce a protection device for an encoder in a rolling bearing, which will be absent of the above-described disadvantages.

According to the present invention, a protection device for an encoder in a rolling bearing according to claim 1 will be produced.

The present invention will now be described with reference to the attached drawings, which illustrate a non-limiting form of embodiment of the present invention, and in which:
- FIGURE 1 illustrates, in axial section, a first preferred form of embodiment of a protection device for an encoder in a rolling bearing according to the present invention; and
- FIGURES 2, 3, and 4 illustrate respective further alternative forms of embodiment of the protection device shown in FIGURE 1.

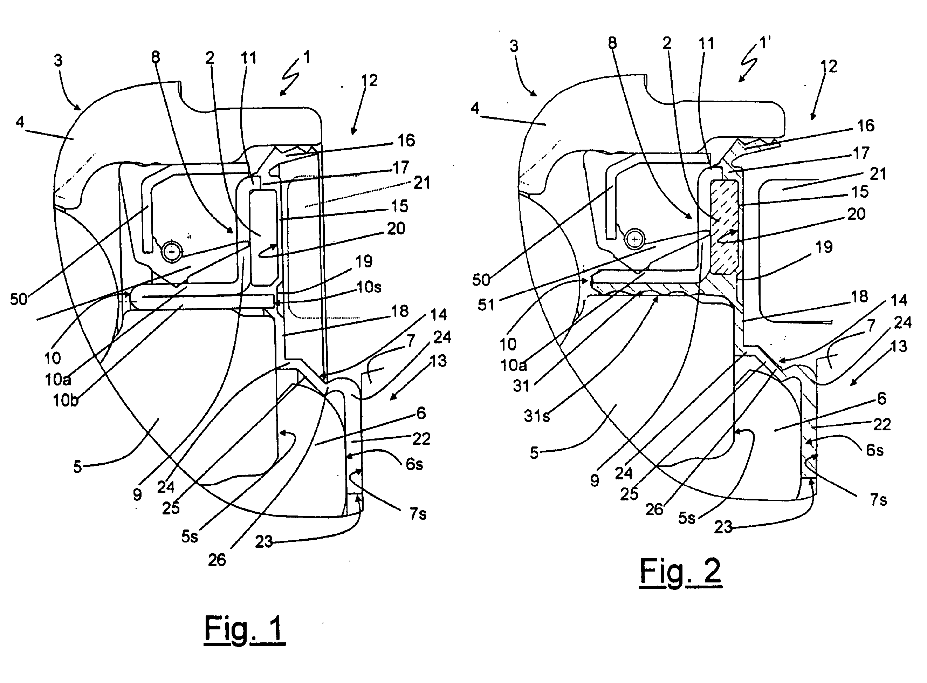

With reference to FIGURE 1, the number 1 indicates a protection device for an encoder 2 in a rolling bearing 3 in its entirety.

The bearing 3 comprises an outer race 4 and an inner race 5 which is rotatable around a rotation axis (which is noted, but not illustrated, and which is indicated in the following, for greater clarity, with the letter A), and is axially blocked by a border 6, which is rolled onto the race 5 itself, and which is mounted in such a way as to abut a blocking shoulder 7 of the bearing 3, or rather with its own frontal surface 6s, which is transverse to the axis A, facing and parallel to a frontal surface 7s of the shoulder 7.

The device 1 comprises a metallic support shield 8, which presents a flange 9 which is integral with the encoder 2, and a cylindrical wall 10 which is transverse to the flange 9 and which is force fit onto the inner race 5. In particular, the cylindrical wall 10 is defined by two cylindrical portions 10a and 10b which are folded one on the other, and of which the portion 10a is connected to the flange 9, while the portion 10b is arranged internally to the portion 10a, and is directly force fit onto the inner race 5. Furthermore, the portion 10b presents an annular frontal surface 10s which is axially arranged in alignment to a frontal surface 5s of the inner race 5, and the flange 9 presents a border 11 which is axially turned towards the outside of the bearing 3 and on the outer periphery of the encoder 2 in such a way as to radially block the encoder 2 itself.

Finally, the device 1 comprises a sealing cover 12 which is mounted in a position which is frontal to the encoder 2 and the inner race 5, a sealing cover 13 which is interposed between the border 6 and the shoulder 7, and a connecting bellows wall 14 between the covers 12 and 13 themselves. In particular, the covers 12 and 13 and the bellows wall 14 are made of rubber material which is defined by elastomeric rubber and they define a single body which is integral with both the shield 8 and the encoder 2 and which is suitable both for protecting the encoder 2 itself, and for crating a static seal between the border 6 and the inner race 5, as well as a dynamic seal between the device 1 and the outer race 4.

The cover 12 comprises a protection wall 15 which is closely connected with the encoder 2 and with the shield 8, and is arranged in contact with the surface 5s of the inner race 5, and a sealing element 16 which is defined by a shaped lip which extends from the protection wall 15 towards the outer race 4 of the bearing 3 in order to create a labyrinth seal with the outer race 4 itself.

The wall 15 presents an external peripheral border 17 which is of a substantially cylindrical shape and which is connected to the border 1 of the flange 9, and an internal peripheral border 18, which is connected to the bellows wall 14, and which is arranged in such a way as to abut the surface 5s. Furthermore, the wall 15 presents a frontal relief 19 which is arranged in correspondence with the support surface 10s in order to permit an assembly thrust of the device 1 itself onto the bearing 3, avoiding, furthermore, that the allowances which have a bearing on the axial position create deformations in the reading zone of the encoder 2. The wall 15 entirely covers the portion 10b in correspondence to the surface 10s thus completely covering, and at least from the external part of the bearing 3, the encoder 2 and protecting the encoder 2 itself from any eventual impacts, damage during manipulation, stones or other contaminating agents. Furthermore, considering that the encoder 2 is at this point arranged inside a sealed chamber 20 and defined on one side by the shield 8 and on the other side by the wall 15, and furthermore considering the elasticity of the material which defines the wall 15 itself, it is possible to guarantee the encoder 2 itself with greater thermal deformation, and it is also possible to avoid even considerable damage to the encoder 2 in the case in which a reading sensor 21 comes into contact with the encoder 2.

The cover 13 comprises an annular sealing wall 22 which is blocked between the surface 6s of the border 6 and the surface 7s of the shoulder 7 in order to create a damping effect between the shoulder 7 which axially blocks the bearing 3 and the border 6 themselves in such a way as to eliminate the noise which is created under tangential accelerating conditions. The annular wall 22 also functions as a static seal between the border 6 and the shoulder 7, thus avoiding any potential corrosion of the area between the border 6 and the inner race 4 which is to the advantage of improving the resistance of the blocking of the bearing 3.

The annular wall 22 is also radially delimited towards the inside by a cylindrical surface 23, and is radially delimited towards the outside by an external peripheral border 24, which is radially curved towards the inside and axially towards the bearing 3, and is connected to the bellows wall 14.

The bellows wall 14 is connected in correspondence to its own axially opposite ends to the border 18 and the border 24, and is axially deformable due to both the elasticity of the rubber material from which it is made, and due to its own conformation which permits a dimensional variation in an axial direction that allows it to conform to dimensional variations in the border 6 or to any stress to which it might be subjected during use.

The bellows wall 14 comprises a tapering portion 25 which is open towards the inside of the bearing 3, and two shaped portions 26 and 27 which are arranged between the tapering portion 25 and, respectively, the border 18 and the border 24, and of which the shaped portion 26 presents a substantially cylindrical conformation, while the portion 27 presents in turn a tapering conformation, but open towards the outside of the bearing 3.

The forms of embodiment which are illustrated in FIGURES 2, 3 and 4 relate to respective devices 1', 1", and 1"' which are similar to the device 1, from which each of these devices differs due to a respective element of construction.

In particular, and in accordance with what is better illustrated in FIGURE 2, the device 1' differs from the device 1 due to the fact that the portion 10b of the cylindrical wall 10 is replaced with an internal lining layer 31, which is made of rubber material and is an integral part of the cover 12, and is thus interposed between the portion 10a of the wall 10 and the inner race 5.

The layer 31 presents a ragged internal cylindrical surface 31s which is suitable for increasing the friction between the shield 8 and the inner race 5 in order to ensure a radial and axial blocking of the device inside the bearing 3.

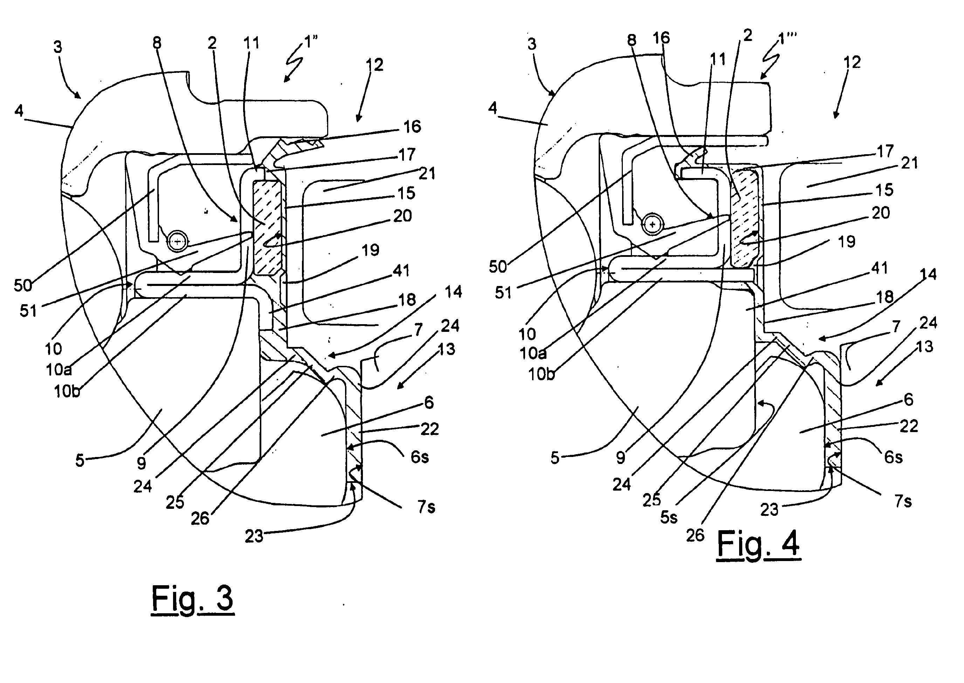

Instead, in accordance with what is better illustrated in FIGURE 3, the device 1'' differs from the device 1 due to the fact that the shield 8 comprises an axial blocking element 41, which is integral with the portion 10b of the wall 10, and is arranged in such a way as to abut the surface 5s of the inner race 5. In particular the element 41 replaces the surface 10s, and is folded at an angle of 90° in relation to the portion 10b in an internally radial direction, and is completely covered by the border 18 which has an axial thickness which is greater than that in the case of the device 1.

Finally, and in accordance with what is better illustrated in FIGURE 4, the device 1"' instead differs from the device 1 due to the fact that the border 11 is replaced by a border 11"' which is axially turned towards the inside of the bearing 3 and does not cover the outside of the encoder 2, and the sealing element 16 is defined by a contacting lip which radially extends towards the outside of the border 11. In this case, furthermore, the border 17 of the wall 15 completely covers the external edge of the encoder 2 as well as the external edge of the border 11'''.

Any of the above-described devices 1, 1', 1", and 1''' whatsoever may be completed with the addition of a further shield 50, which is axially arranged inside the shield 8, and which is force fit inside the race 4, and is provided with a respective contacting lip 51 which is arranged in sliding contact with the portion 10a and the flange 9 of the shield 8 itself.

## Claims

1. Protection device (2)(1')(1")(1''') for an encoder (2) in a rolling bearing (3), which is axially blocked by a rolled border (6) on a respective inner race (5), and is mounted in such a way that the rolled border (6) abuts a blocking shoulder (7); the device (1) (1') (1") (1''') comprising a support shield (8) which is integral with the encoder (2) and which is able to be mounted onto the inner race (5), a first sealing cover (12) which is mounted in a position which is frontal to the encoder (2), a second sealing cover (13), and connecting means (14) between the said first and second covers (12, 13) and defines a single body with the first and second covers (12, 13) themselves , **characterised in that** the second sealing cover (13) is suitable to be interposed between the rolled border (6) and the shoulder (7).

2. Device according to Claim 1, **characterised by** the fact that the first cover (12) is made of rubber material, and comprises:
- a protection wall (15) which is closely connected with the said encoder (2) and which is arranged partially in contact with the said support shield (8); and
- a sealing element (16) which substantially extends from the protection wall (15) towards an outer race (4) of the said bearing (3).

3. Device according to Claim 2, **characterised by** the fact that the second cover (13) is made of rubber material, and comprises an annular sealing wall (22) which is suitable to be blocked between the rolled border (6) and the shoulder (7), both for creating a damping effect between the rolled border (6) and the shoulder (7) themselves, and for creating a static seal on the rolled border (6).

4. Device according to Claim 3, **characterised by** the fact that the said connecting means (14) are made of rubber material, and are axially deformable.

5. Device according to Claim 4, **characterised by** the fact that the said connecting means (14) comprise a bellows wall (14) which is integral with both the protection wall (15) of the first cover (12) and the annular sealing wall (22) of the second cover (13).

6. Device according to Claim 5, **characterised by** the fact that the said rubber material is defined by elastomeric rubber.

7. Device according to any of the Claims from 2 to 6, **characterised by** the fact that the support shield (8) comprises a support flange (9) which is directly connected to the encoder (2) and a cylindrical wall (10) which is made of metallic material and which functions to anchor the encoder (2) to the inner race (5).

8. Device according to Claim 7, **characterised by** the fact that the cylindrical wall (10) is able to be directly force fit onto the inner race (5) itself.

9. Device according to Claims 7 or 8, **characterised by** the fact that the support shield (8) comprises an axial blocking element (41), which is integral with the cylindrical wall (10), and which is arranged in such a way as to abut an external axial surface (5s) of the inner race (5).

10. Device according to Claims 7, 8, or 9, **characterised by** the fact that the support shield (8) comprises a lining (31) which is made of rubber material and which is integral with the said cylindrical wall (10) and which is interposed between the cylindrical wall (10) itself and the said inner race (5).

11. Device according to claim 10, **characterised by** the fact that the said lining (31) which is made of rubber material is an integral part of the said first cover (12) and presents an internal ragged cylindrical surface (31s) which functions to increase the adherence between the support shield 88) and the inner race (5).

12. Device according to Claim 7, **characterised by** the fact that the said sealing element (16) is integral with the protection wall (15) and comprises a shaped lip (16) which is arranged to face the outer race (4) in order to create a labyrinth seal.

13. Device according to Claim 7, **characterised by** the fact that the said sealing element (16) comprises a contacting lip (16) which radially extends towards the outside of the said support shield (8); the said support flange (9) presenting an external radial border (11) which is turned towards the interior of the bearing 3 in support of the contacting lip (16).

14. Device according to any of the preceding Claims, **characterised by** the fact that the first cover (12) comprises a frontal relief (19) which is arranged in correspondence with the support shield (8) in order to provide an assembly thrust of the device itself in relation to the bearing (3).

## Patentansprüche

1. Schutzvorrichtung (1) (1') (1") (1''') für einen Codierer (2) in einem Wälzlager (3), der axial durch einen eingerollten Rand (6) an einem jeweiligen inneren Laufring (5) blockiert ist und auf eine solche Weise angebracht ist, dass der eingerollte Rand (6) an eine Blockierschulter (7) stößt; wobei die Vorrichtung (1) (1') (1") (1''') einen Halteschild (8), der einstückig mit dem Codierer (2) ausgeführt ist und dazu ausgelegt ist, am inneren Laufring (5) angebracht zu werden, eine erste abdichtende Abdeckung (12), die an einer zum Codierer (2) stirnseitigen Position angebracht ist, eine zweite abdichtende Abdeckung (13), und ein Verbindungsmittel (14) zwischen der ersten und der zweiten Abdeckung (12, 13) umfasst und mit der ersten und der zweiten Abdeckung (12) selbst einen einzelnen Körper definiert, **dadurch gekennzeichnet, dass** die zweite abdichtende Abdeckung (13) dazu geeignet ist, zwischen dem eingerollten Rand (6) und der Schulter (7) eingefügt zu werden.

2. Vorrichtung nach Anspruch 1, **dadurch gekennzeichnet, dass** die erste Abdeckung (12) aus einem Gummimaterial besteht und
- eine Schutzwand (15), die eng mit dem Codierer (2) verbunden ist und teilweise in Kontakt mit dem Halteschild (8) angeordnet ist; und
- ein Dichtungselement (16), das sich im Wesentlichen von der Schutzwand (15) zu einem äußeren Laufring (4) des Lagers (3) hin erstreckt,

3. Vorrichtung nach Anspruch 2, **dadurch gekennzeichnet, dass** die zweite Abdeckung (13) aus einem Gummimaterial besteht und eine ringförmige Dichtungswand (22) umfasst, die dazu geeignet ist, zwischen dem eingerollten Rand (6) und der Schulter (7) blockiert zu werden, um zwischen dem eingerollten Rand (6) und der Schulter (7) selbst eine Dämpfungswirkung zu schaffen, und um eine statische Dichtung am eingerollten Rand (6) zu schaffen.

4. Vorrichtung nach Anspruch 3, **dadurch gekennzeichnet, dass** das Verbindungsmittel (14) aus einem Gummimaterial besteht und axial verformbar ist.

5. Vorrichtung nach Anspruch 4, **dadurch gekennzeichnet, dass** das Verbindungsmittel (14) eine Balgenwand (14) umfasst, die sowohl mit der Schutzwand (15) der ersten Abdeckung (12) als auch mit der ringförmigen Dichtungswand (22) der zweiten Abdeckung (13) einstückig ausgeführt ist.

6. Vorrichtung nach Anspruch 5, **dadurch gekennzeichnet, dass** das Gummimaterial durch elastomeren Gummi definiert ist.

7. Vorrichtung nach einem der Ansprüche 2 bis 6, **dadurch gekennzeichnet, dass** der Halteschild (8) einen Halteflansch (9), der direkt mit dem Codierer (2) verbunden ist, und eine zylinderförmige Wand (10), die aus einem Metallmaterial besteht und zum Verankern des Codierers (2) am inneren Laufring (5) wirkt, umfasst.

8. Vorrichtung nach Anspruch 7, **dadurch gekennzeichnet, dass** die zylinderförmige Wand (10) zu einem direkten Festsitz am inneren Laufring (5) selbst fähig ist.

9. Vorrichtung nach Anspruch 7 oder 8, **dadurch gekennzeichnet, dass** der Halteschild (8) ein axiales Blockierelement (41) umfasst, das mit der zylinderförmigen Wand (10) einstückig ausgeführt ist, und das auf eine solche Weise angeordnet ist, dass es an eine äußere axiale Fläche (5s) des inneren Laufrings (5) anstößt.

10. Vorrichtung nach Anspruch 7, 8 oder 9, **dadurch gekennzeichnet, dass** der Halteschild (8) einen Belag (31) umfasst, der aus einem Gummimaterial besteht und mit der zylinderförmigen Wand (10) einstückig ausgeführt ist und zwischen der zylinderförmigen Wand (10) selbst und dem inneren Laufring (5) eingefügt ist.

11. Vorrichtung nach Anspruch 10, **dadurch gekennzeichnet, dass** der Belag (31), der aus einem Gummimaterial besteht, ein einstückiger Teil der ersten Abdeckung (12) ist und eine innere zackige zylinderförmige Fläche (31s) zeigt, die zum Erhöhen der Haftung zwischen dem Halteschild (8) und dem inneren Laufring (5) wirkt.

12. Vorrichtung nach Anspruch 7, **dadurch gekennzeichnet, dass** das Dichtungselement (16) einstückig mit der Schutzwand (15) ausgeführt ist und eine geformte Lippe (16) umfasst, die so angeordnet ist, dass sie zum äußeren Laufring (4) gerichtet ist, um eine Labyrinthdichtung zu schaffen.

13. Vorrichtung nach Anspruch 7, **dadurch gekennzeichnet, dass** das Dichtungselement (16) eine Kontaktlippe (16) umfasst, die sich radial zur Außenseite des Halteschilds (8) hin erstreckt; und der Halteflansch (9) einen äußeren radialen Rand (11) zeigt, der zur Unterstützung der Kontaktlippe (16) zur Innenseite des Lagers (3) gedreht ist.

14. Vorrichtung nach einem der vorhergehenden Ansprüche, **dadurch gekennzeichnet, dass** die erste Abdeckung (12) eine stirnseitige Aussparung (19) umfasst, die in Übereinstimmung mit dem Halteschild (8) angeordnet ist, um einen Aufbauschub der Vorrichtung selbst in Bezug auf das Lager (3) bereitzustellen.

## Revendications

1. Dispositif de protection (1) (1') (1") (1''') destiné à un codeur (2) dans un palier de roulement (3), qui est axialement bloqué par une bordure (6) enroulée sur une bague intérieure respective (5), et est monté de telle manière que la bordure enroulée (6) vienne en butée sur un épaulement de blocage (7), le dispositif (1) (1') (1") (1''') comprenant un élément de protection de support (8) qui est solidaire du codeur (2) et qui est apte à être installé sur la bague intérieure (5), un premier capot d'étanchéité (12) monté dans une position qui est frontale au codeur (2), un deuxième capot d'étanchéité (13), et un moyen de raccord (14) agencé entre ledit premier capot et ledit deuxième capot (12, 13) et définissant un seul corps avec les premier et deuxième capots (12, 13) eux-mêmes, **caractérisé en ce que** le deuxième capot d'étanchéité (13) est approprié pour être intercalé entre la bordure enroulée (6) et l'épaulement (7).

2. Dispositif selon la revendication 1, **caractérisé par le fait que** le premier capot (12) est constitué d'un matériau de caoutchouc, et comprend :
- une paroi de protection (15) qui est reliée étroitement audit codeur (2) et qui est agencée partiellement en contact avec ledit élément de protection de support (8), et
- un élément d'étanchéité (16) qui s'étend globalement depuis la paroi de protection (15) vers une bague extérieure (4) dudit palier de roulement (3).

3. Dispositif selon la revendication 2, **caractérisé par le fait que** le deuxième capot (13) est constitué d'un matériau de caoutchouc, et comprend une paroi d'étanchéité annulaire (22) qui est appropriée pour être bloquée entre la bordure enroulée (6) et l'épaulement (7), à la fois pour créer un effet d'amortissement entre la bordure enroulée (6) et l'épaulement (7) eux-mêmes et pour créer une étanchéité statique sur la bordure enroulée (6).

4. Dispositif selon la revendication 3, **caractérisé par le fait que** ledit moyen de raccord (14) est constitué d'un matériau de caoutchouc et est axialement déformable.

5. Dispositif selon la revendication 4, **caractérisé par le fait que** ledit moyen de raccord (14) comprend une paroi de soufflet (14) qui est solidaire à la fois de la paroi de protection (15) du premier capot (12) et de la paroi d'étanchéité annulaire (22) du deuxième capot (13).

6. Dispositif selon la revendication 5, **caractérisé par le fait que** ledit matériau de caoutchouc est défini par un caoutchouc élastomère.

7. Dispositif selon l'une quelconque des revendications 2 à 6, **caractérisé par le fait que** l'élément de protection de support (8) comprend une bride de support (9) qui est reliée directement au codeur (2), et une paroi cylindrique (10) qui est constituée d'un matériau métallique et qui fonctionne pour ancrer le codeur (2) à la bague intérieure (5).

8. Dispositif selon la revendication 7, **caractérisé par le fait que** la paroi cylindrique (10) est apte à être ajustée serré directement sur la bague intérieure (5) elle-même.

9. Dispositif selon la revendication 7 ou 8, **caractérisé par le fait que** l'élément de protection de support (8) comprend un élément de blocage axial (41), qui est solidaire de la paroi cylindrique (10), et qui est agencé de manière à venir en butée sur une surface axiale externe (5s) de la bague intérieure (5).

10. Dispositif selon la revendication 7, 8 ou 9, **caractérisé par le fait que** l'élément de protection de support (8) comprend un revêtement (31) qui est constitué d'un matériau de caoutchouc, qui est solidaire de ladite paroi cylindrique (10) et qui est intercalé entre la paroi cylindrique (10) elle-même et ladite bague intérieure (5).

11. Dispositif selon la revendication 10, **caractérisé par le fait que** ledit revêtement (31) qui est constitué d'un matériau de caoutchouc est une partie intégrante dudit premier capot (12), et présente une surface cylindrique interne inégale (31s) qui agit pour augmenter l'adhérence entre l'élément de protection de support (8) et la bague interne (5).

12. Dispositif selon la revendication 7, **caractérisé par le fait que** ledit élément d'étanchéité (16) est d'une pièce avec la paroi de protection (15), et comprend une lèvre conformée (7) qui est agencée pour faire face à la bague extérieure (4) de manière à créer un joint en labyrinthe.

13. Dispositif selon la revendication 7, **caractérisé par le fait que** ledit élément d'étanchéité (16) comprend une lèvre de contact (16) qui s'étend radialement vers l'extérieur dudit élément de protection de support (8), ladite bride de support (9) présentant une bordure radiale externe (11) qui est orientée vers l'intérieur du palier de roulement (3) pour le support de la lèvre de contact (16).

14. Dispositif selon l'une quelconque des revendications précédentes, **caractérisé par le fait que** le premier capot (12) comprend un évidement frontal (19) qui est agencé en correspondance avec l'élément de protection de support (8), de manière à fournir une poussée d'assemblage du dispositif lui-même par rapport au roulement (3).
